# EUROPÄISCHE PATENTSCHRIFT

(11) **EP 0 750 781 B1**
(45) Veröffentlichungstag und Bekanntmachung des Hinweises auf die Patenterteilung: **29.12.1997**
(21) Anmeldenummer: 95928383.9
(22) Anmeldetag: 16.03.1995
(51) Int. Cl.: G11B 33/04

(54) **BEHÄLTNIS ZUR AUFBEWAHRUNG UND ZUM SCHUTZ VON TONTRÄGERN**
CONTAINER FOR STORING AND PROTECTING SOUND CARRIERS
BOITE POUR CONSERVER ET PROTEGER DES SUPPORTS DE SONS

(30) Priorität: 16.03.1994 DE 4408851
(43) Veröffentlichungstag der Anmeldung: 02.01.1997
(73) Patentinhaber: Lauble, Johann Georg, 78126 Königsfeld (DE)
(72) Erfinder: Lauble, Johann Georg, 78126 Königsfeld (DE)
(74) Vertreter: KEIL & SCHAAFHAUSEN Patentanwälte
(86) Internationale Anmeldenummer: EP9501004
(87) Internationale Veröffentlichungsnummer: WO9525328

(56) Entgegenhaltungen:
- EP-A- 0 181 835
- EP-A- 0 362 485
- DE-C- 512 754
- FR-A- 2 590 395
- FR-A- 2 644 439
- US-A- 1 440 737
- US-A- 5 135 105

## Beschreibung

Die Erfindung betrifft ein Behältnis zur Aufbewahrung und zum Schutz von Tonträgern, insbesondere von Disketten, Compact Discs oder dgl., mit einem flachen Aufnahmeteil, das eine Ausnehmung zur zumindest teilweisen Aufnahme eines Tonträgers aufweist, und einem Verschlußteil, das mit dem Aufnahmeteil derart verbunden ist, daß das Aufnahmeteil zur Entnahme bzw. zum Einsetzen des Tonträgers in das Verschlußteil ein- bzw. herausschwenkbar ist, und wobei der Tonträger bei geschlossenem Behältnis vollständig von dem Aufnahmeteil und dem Verschlußteil umschlossen ist.

Um bei Tonträgern, wie beispielsweise Compact Discs (CD), eine lange Lebensdauer, d. h. eine oftmalige Abspielung und Wiedergabe bei annähernd gleich guter Qualität, zu gewährleisten, muß der Tonträger vor Staub, Schmutz und mechanischen Einflüssen, insbesondere vor Verkratzen, geschützt werden. Hierzu dienen geschlossene Behältnisse, die in unterschiedlichsten Formen und Ausgestaltungen im Handel erhältlich sind.

Für Compact Discs werden zur Verwendung in der Musikbranche am häufigsten Behältnisse benutzt, die aus einem rechteckigen Boden und einem rechteckigen Deckel aus durchsichtigem Kunststoff bestehen, welche an einer Kante mittels eines Scharniers aufklappbar miteinander verbunden sind. Darin befindet sich eine rechteckige Kunststoffeinlage, welche die Compact Disc in deren Mitte aufnimmt und fixiert. Diese Behältnisse sind jedoch relativ sperrig und verglichen mit der Größe und der flachen Form der Compact Disc überdimensioniert. Außerdem erfordern diese aus drei Bauteilen bestehenden Behältnisse beim Öffnen und Entnehmen der Compact Disc eine sehr sachgemäße Handhabung. Daß das geöffnete Behältnis doppelt so groß wie das geschlossene ist, ist ein weiterer Nachteil dieser relativ kostspieligen Verpackung.

Um insbesondere zur Verwendung im Auto eine einfache Bedienung, insbesondere eine einhändige Entnahme und Rückgabe der Diskette aus dem Behältnis bzw. in das Behältnis zu ermöglichen, ist in der EP 0 181 835 A2 bereits ein Behältnis beschrieben, bei dem das Verschlußteil eine rechteckige Grundform aufweist, dessen eine Schmalseite von einem in einem Eckbereich drehbar angeordneten deckelförmigen Aufnahmeteil abgedeckt wird. Der Deckel ist integral mit einem im wesentlichen U-förmigen, in geschlossenem Zustand in das Behältnis hineinragenden Diskettenhalter verbunden. Zur Entnahme oder zum Einsetzen einer Diskette ist der Diskettenhalter durch Öffnen des Deckels aus dem Behältnis herausschwenkbar. Diese bekannte Vorrichtung ist relativ aufwendig in der Herstellung und in aufgeklapptem Zustand recht sperrig.

Aufgabe der vorliegenden Erfindung ist es daher, ein Behältnis der eingangs genannten Art zu schaffen, das der Form und Größe der Compact Disc angepaßt ist, das auch im geöffneten Zustand keinen zusätzlichen Platz benötigt, das weniger Bauteile aufweist als die herkömmlichen Behältnisse für Tonträger wie Compact Discs oder dgl. und das mit geringeren Kosten herstellbar ist.

Diese Aufgabe wird erfindungsgemäß dadurch gelöst, daß das Aufnahmeteil eine annähernd halbkreisscheibenförmige Aufnahmehülle und das Verschlußteil eine ebenfalls annähernd halbkreisscheibenförmige Verschlußhülle ist, daß die Innenkontur der Aufnahmehülle einen gleichen oder etwas größeren Kreisradius und eine gleiche oder etwas größere Dicke als der Tonträger aufweist, daß die Außenkontur der Aufnahmehülle einen gleichen oder etwas kleineren Kreisradius und eine gleiche oder etwas kleinere Dicke als die Innenkontur der Verschlußhülle aufweist und daß die Verbindung der Aufnahmehülle mit der Verschlußhülle annähernd in deren Kreismittelpunkten ausgebildet ist. Ein derartiges Behältnis, das an die Form des zu verpackenden Tonträgers angepaßt ist, baut nicht nur klein, sondern ermöglicht auch eine einfache und sichere Handhabung. Da das Behältnis nur aus zwei ineinander verdrehbaren Hüllen besteht, ist es kostengünstig herzustellen und nimmt in geöffnetem Zustand ohne eingesetzten Tonträger sogar nur halb so viel Raum wie in geschlossenem Zustand ein. Die Aufnahmehülle kann um ihre senkrecht zur Halbkreisscheibenebene stehende und durch den Mittelpunkt gehende Achse gegen die Verschlußhülle verdreht werden. Wenn die Aufnahmehülle annähernd vollständig in die Verschlußhülle hineingedreht ist, kann der Tonträger in die Aufnahmehülle eingelegt oder aus ihr entnommen werden. Ist die Aufnahmehülle mit dem eingesetzten Tonträger aus der Verschlußhülle vollständig herausgedreht, ist auch der Tonträger vollständig in dem Behältnis eingeschlossen. Die geringe Bauteilezahl und kleine Baugröße des erfindungsgemäßen Behältnisses wirkt sich günstig sowohl auf den Platzbedarf als auch auf den Preis aus.

Gemäß einer zweckmäßigen Ausgestaltung der Erfindung kann die drehbare Verbindung zwischen der Aufnahmehülle und der Verschlußhülle dadurch erfolgen, daß eine der beiden Hüllen in ihrer Drehachse eine insbesondere zylinderförmige Aussparung aufweist, in die ein an der jeweils anderen Hülle angeordneter, insbesondere formgleicher Zapfen eingreift. Somit kann auf ein Gelenk oder eine Achse oder ähnliches verzichtet werden. Man braucht lediglich die beiden Hüllen ineinander zu stecken, so daß der Zapfen der einen Hülle in die Aussparung der anderen Hülle schnappt. Damit ist das erfindungsgemäße Behältnis bereits montiert.

In Weiterbildung des Erfindungsgedankens ist vorgesehen, daß an der Aufnahmehülle bzw. der Verschlußhülle ein oder mehrere Vorsprünge ausgebildet sind, die in entsprechende Ausnehmungen in der Verschlußhülle bzw. der Aufnahmehülle formschlüssig ineinandergreifen. Die Vorsprünge können dabei als Verschluß dienen, so daß die Aufnahmehülle sich nicht selbständig aus der Verschlußhülle herausdrehen kann, wenn das Behältnis ganz geschlossen bzw. ganz geöffnet ist.

Es hat sich als zweckmäßig erwiesen, die Vorsprünge an den äußeren Eckkanten der Aufnahmehülle bzw. der Verschlußhülle anzuordnen. In diesem Fall sind die Ausnehmungen vorteilhafterweise ebenfalls in den äußeren Eckkanten der Verschlußhülle bzw. der Aufnahmehülle angeordnet.

Um eine noch bessere Handhabung zu ermöglichen, ist in Weiterbildung dieses Erfindungsgedankens vorgesehen, daß im äußeren Randbereich der Aufnahmehülle eine Greifvorrichtung vorgesehen ist, die mit als Anschlag dienenden Ausnehmungen im äußeren Randbereich der Verschlußhülle in Eingriff bringbar ist. Als Greifvorrichtung können erfindungsgemäß Kugeln, Knöpfe, Halter, Haken oder dgl. dienen. Die Haken können gleichzeitig als Aufhängevorrichtung an einen speziellen Ständer, insbesondere Verkaufsständer dienen. Diese Haken oder dgl. können an den oben erwähnten Vorsprüngen angebracht sein.

Um einen besseren Fingeransatz zu ermöglichen, ist erfindungsgemäß vorgesehen, daß an der Aufnahmehülle und/oder der Verschlußhülle Riffelungen ausgebildet sind.

Um eine Berührung der beiden Seitenflächen des flachen Tonträgers, insbesondere der Compact Disc, mit den Innenwänden der Hüllen zu vermeiden, ist gemäß einer weiteren Ausgestaltung der Erfindung an der Stirnseite der Ausnehmung zur Aufnahme des Tonträgers in der Aufnahmehülle eine radiale Innennut ausgebildet. Diese ist erfindungsgemäß so dimensioniert, daß der radiale äußere, unbespielte Rand des Tonträgers, insbesondere einer Compact Disc, in der Innennut eingreift und dort gegebenenfalls leicht einklemmbar ist.

Die halbkreisscheibenförmigen Innenwände der Aufnahmehülle und/oder der Verschlußhülle können erfindungsgemäß kratzfrei ausgebildet sein. Damit kann der Tonträger auch dann ohne zusätzliche Schutzhülle in die Aufnahmehülle eingesteckt werden, wenn diese keine radiale Innennut aufweist, ohne daß die Gefahr besteht, daß der Tonträger verkratzt wird, was dessen Qualität mindern und den Tonträger möglicherweise gar zerstören würde.

Ebenfalls dem Schutz des Tonträgers dient als weitere erfindungsgemäße Ausgestaltung des Behältnisses, daß die Ausnehmung in der Aufnahmehülle in ihrer Breite etwas nach außen gewölbt ist. Ebenfalls als Schutz und zusätzlich als Einführhilfe für den Tonträger ist zumindest an einer der beiden Seitenränder der Aufnahmehülle ein Vorsprung ausgebildet.

Die beiden Hüllen des erfindungsgemäßen Behältnisses können erfindungsgemäß aus Kunststoff oder Metall oder Pappe oder aus einer Kombination dieser Materialien bestehen. So können für die verschiedensten Ansprüche (kostengünstig-exklusiv, großekleine Losgröße, etc.) die Behältnisse aus den dafür geeignetsten Materialien gefertigt sein.

Die Behältnisse können zweckmäßigerweise stapelbar sein. Dazu sind an den Hüllen Aussparungen, Vertiefungen oder dgl. Ausnehmungen und entsprechende Gegenstücke vorgesehen. Auch können die Behältnisse durch an den Hüllen angebrachte Verbindungsmittel miteinander verbunden werden. Damit können viele Tonträger, insbesondere Compact Discs, in Ihren Behältnissen übereinander oder nebeneinander auf kleinem Raum untergebracht werden. Die Behältnisse können dabei in speziell für diese Behältnisse konstruierten oder auch in herkömmlichen Ständern gelagert sein.

Gemäß einer weiteren Ausgestaltung der Erfindung kann ein Behältnis für zwei Tonträger oder ein Magazin von mehreren Tonträgern dadurch realisiert werden, daß eine Verschlußhülle zwei oder mehrere halbkreisscheibenförmige Innenräume aufweist, die mit einer entsprechenden Anzahl von Aufnahmehüllen drehbar verbunden sind. In jeder Aufnahmehülle kann dann jeweils ein Tonträger, beispielsweise eine Compact Disc eingelegt werden. Zur Verwendung für Abspielgeräte mit Compact Disc-Wechseleinrichtung für Compact Disc-Automaten oder als Zwischenablage für Compact Discs können solche Magazine für mehrere Compact Discs Verwendung finden.

Gemäß einer noch weiteren Ausgestaltung der Erfindung kann der Tonträger, insbesondere die Compact Disc, während der Wiedergabe in dem Behältnis verbleiben, wobei ein Mechanismus des Abspielgerätes für das Abspielen des Tonträgers sorgt. Z.B. können Compact Discs, die als Datenspeicher für Rechner dienen, ähnlich wie Disketten in dem festen Behältnis in das Laufwerk des Rechners geschoben werden, wo dann ein Mechanismus bzw. Lesekopf den Zugriff auf die gespeicherten Daten herstellt.

Weitere Merkmale, Vorteile und Anwendungsmöglichkeiten der Erfindung ergeben sich auf der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung dar, unabhängig von ihrer Zusammenfassung in den Ansprüchen oder deren Rückbeziehung.

Es zeigen:
- Fig. 1: eine Draufsicht auf ein teilweise geöffnetes Behältnis mit einer eingelegten Compact Disc,
- Fig. 2: eine Draufsicht auf eine Aufnahmehülle eines Behältnisses gemäß Fig. 1,
- Fig. 3: eine Seitenansicht auf die in Fig. 2 dargestellte Aufnahmehülle,

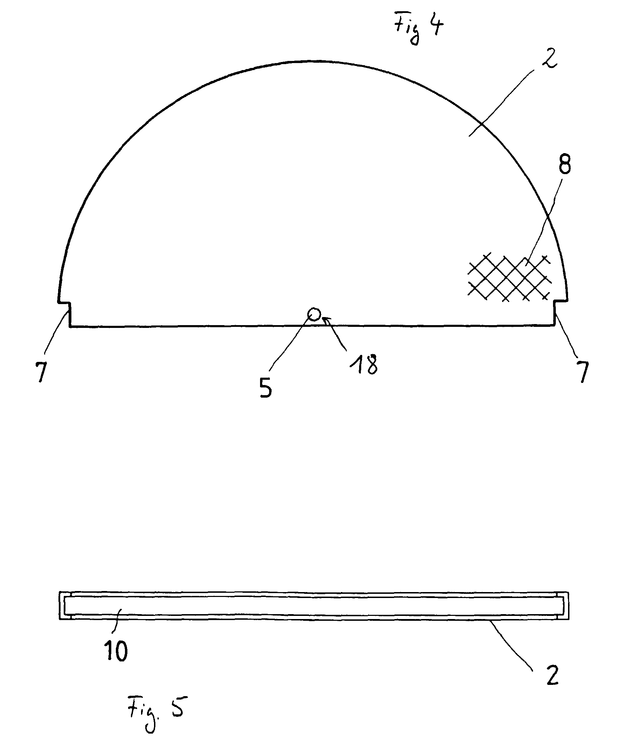

- Fig. 4: eine Draufsicht auf eine Verschlußhülle eines Behältnisses gemäß Fig. 1,

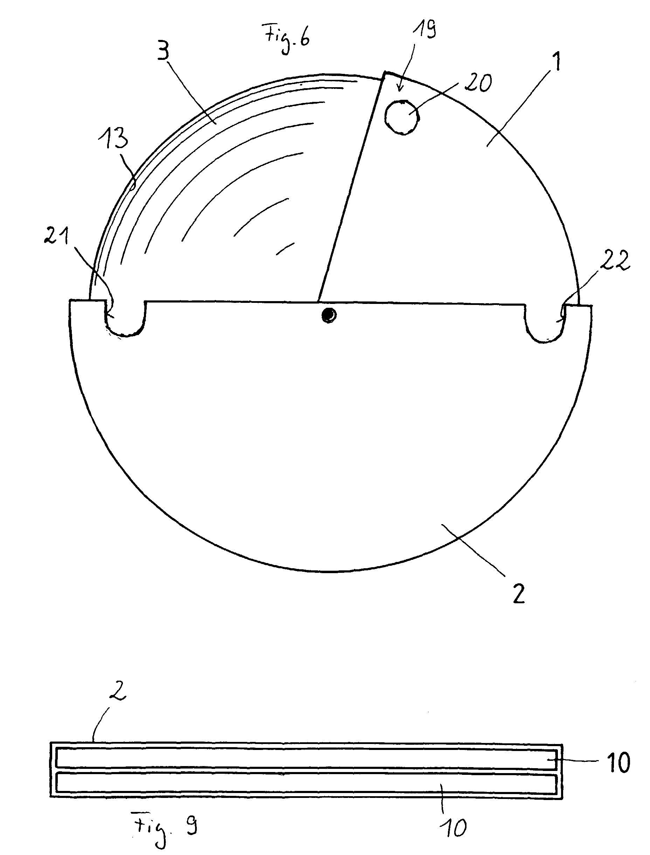

- Fig. 5: eine Seitenansicht auf die in Fig. 4 dargestellte Verschlußhülle,
- Fig. 6: eine Draufsicht auf eine andere Ausführungsform eines erfindungsgemäßen Behältnisses in einer Fig. 1 entsprechenden Darstellung,
- Fig. 7: eine den Fig. 3 und 5 entsprechende Seitenansicht auf eine Aufnahmehülle mit einer gewölbten Ausnehmung und einer dazugehörigen Verschlußhülle,
- Fig. 8: eine perspektivische Ansicht auf eine weitere Ausführungsform einer Verschlußhülle mit einer Einführungshilfe und
- Fig. 9: eine Seitenansicht auf eine Verschlußhülle für zwei Tonträger, insbesondere zwei Compact Discs.

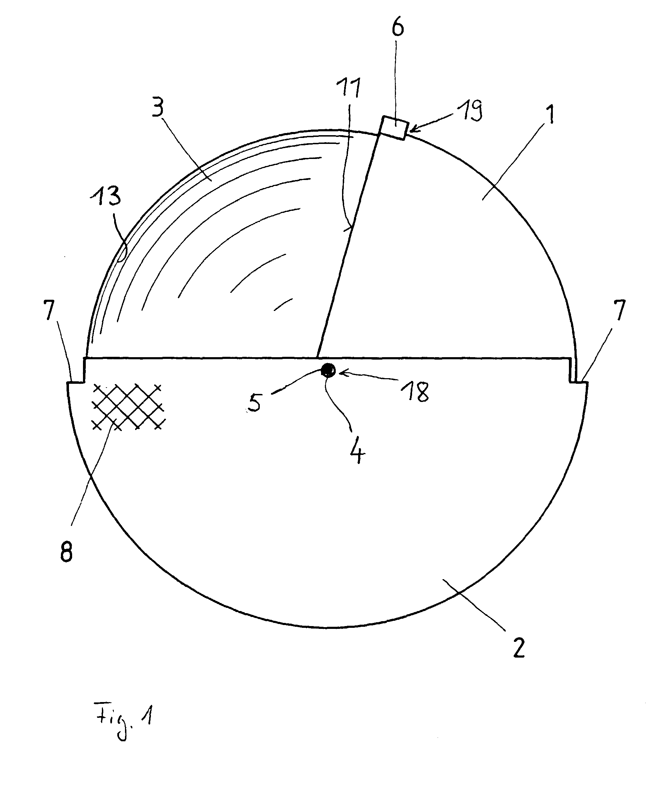

Das in Fig. 1 dargestellte Behältnis besteht aus einer flachen halbkreisförmigen Aufnahmehülle 1 und einer ebenfalls halbkreisscheibenförmigen Verschlußhülle 2. In einer Ausnehmung 11 in der Aufnahmehülle 1 ist ein Tonträger 3, im dargestellten Ausführungsbeispiel eine Compact Disc, eingelegt. Die Aufnahmehülle 1 ist in der Verschlußhülle 2 angeordnet, wobei die scheibenförmige Aufnahmehülle 1 einen gleichen oder etwas kleineren Durchmesser als die ebenfalls scheibenförmige Verschlußhülle 2 aufweist. Die Aufnahmehülle 1 ist in die Verschlußhülle 2 ein- bzw. aus dieser herausschwenkbar. Hierzu ist die Aufnahmehülle 1 in ihrem Kreismittelpunkt 18 über einen zylinderförmigen Zapfen 4 und eine formgleiche Aussparung 5 drehfest mit der Verschlußhülle 2 in deren Kreismittelpunkt 18 verbunden.

Wenn die Aufnahmehülle 1 im dargestellten Ausführungsbeispiel im Uhrzeigersinn gegen die Verschlußhülle 2 verdreht wird, taucht die Aufnahmehülle 1 in die Verschlußhülle 2 ein, so daß eine Compact Disc 3 in die Aufnahmehülle eingesteckt oder aus ihr wieder entnommen werden kann. Dreht man nun die Aufnahmehülle 1 samt eingelegter Compact Disc 3 gegen den Uhrzeigersinn um ungefähr 180° gegen die Verschlußhülle 2, wird das Behältnis geschlossen und die Compact Disc 3 ist vollständig eingeschlossen und damit geschützt.

Um die Handhabung zu erleichtern, ist an einer der Ecken 19 der Aufnahmehülle 1 ein Vorsprung 6 ausgebildet, der in entsprechende Ausnehmungen 7 an den beiden radial außen liegenden Ecken der Verschlußhülle 2 zur Anlage kommt. Damit wird ein volles Eindrehen der Aufnahmehülle 1 in die Verschlußhülle 2 ermöglicht, wodurch das Einlegen und das Entnehmen der Compact Disc 3 ermöglicht wird. Außerdem läßt sich die Aufnahmehülle 1 an dem Vorsprung 6 gut anfassen. Für einen noch besseren Fingeransatz dienen an der Verschlußhülle 2 angebrachte Riffelungen 8.

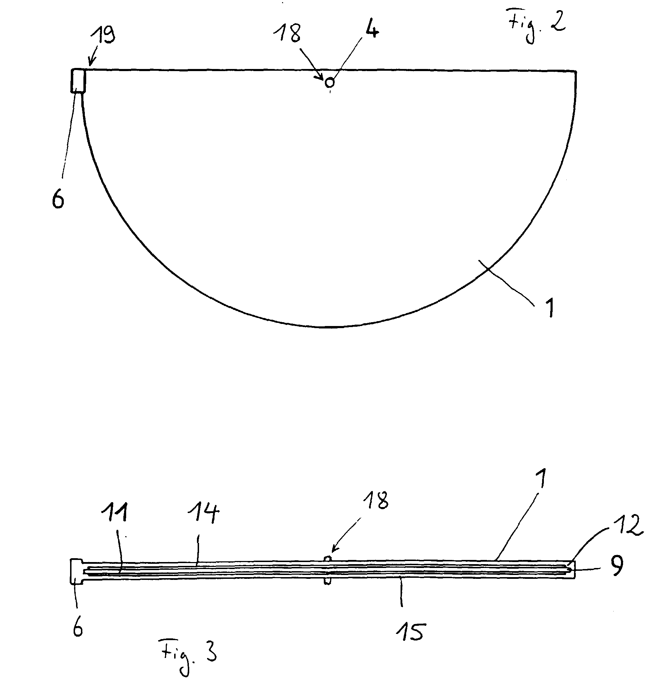

Wie aus der in Fig. 3 dargestellten Seitensicht der in Fig. 2 gezeigten Aufnahmehülle 1 zu ersehen ist, ist an der Stirnseite 12 der Ausnehmung 11 eine radiale Innennut 9 ausgebildet. Die radiale Innennut 9 dient zur Aufnahme der Compact Disc 3 an ihrem radial äußeren, unbespielten Rand 13. Damit ist die Compact Disc 3 an ihren bespielten Seitenflächen berührungsfrei in der Aufnahmehülle 1 angeordnet. Eine Beschädigung des Tonträgers wird auch dadurch verhindert, daß die Innenwände der halbkreisscheibenförmigen Aufnahmehülle 1 und Verschlußhülle 2 kratzfrei ausgebildet sind.

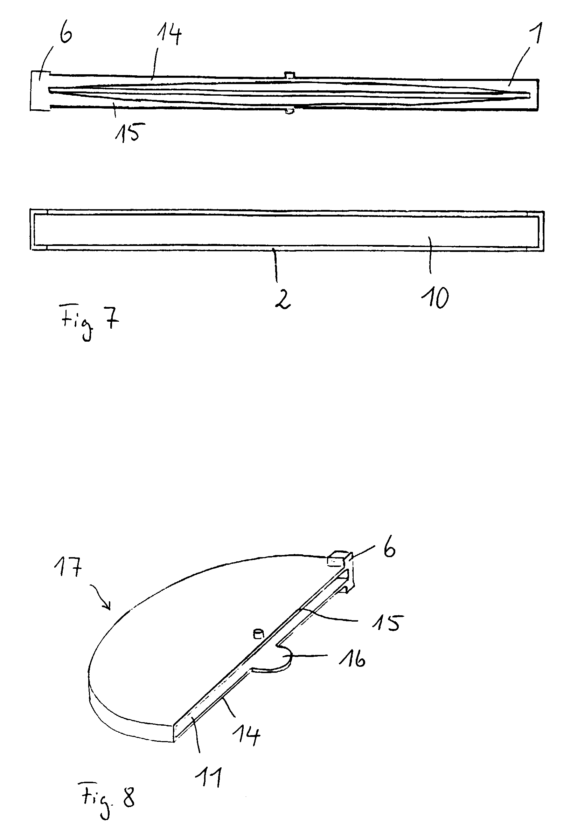

Das Einführen einer Compact Disc 3 oder dgl. in die Aufnahmehülle 1 kann gemäß der in Fig. 7 dargestellten Ausführungsform dadurch erleichtert werden, daß die Ausnehmung 11 in der Aufnahmehülle 1 in ihrer Breite etwas nach außen gewölbt ist. Durch die Wölbung kommt die Oberfläche des Tonträgers nicht mit der Aufnahmehülle in Berührung, so daß ein Verkratzen verhindert wird. Eine zusätzliche Einführungshilfe ist in Fig. 8 dargestellt. Danach ist an der Seitenwand 14 der Aufnahmehülle 1 ein zustätzlicher Vorsprung 16 ausgebildet. Ein derartiger Vorsprung kann aber auch an der anderen oder an beiden Seitenwänden vorgesehen sein. Die Verlängerung der Seitenwände der Aufnahmehülle 1 läßt sich sowohl bei dem in Fig. 3 als auch bei dem in Fig. 7 gezeigten Ausführungsbeispiel und bei jeder sonstigen Ausführungsform verwirklichen.

Die Aufnahmehülle 1 und die Verschlußhülle 2 können aus Kunststoff, Metall, Pappe oder aus einer Kombination dieser Materialien bestehen. Wie nicht näher dargestellt ist, können die Behältnisse auch gestapelt oder miteinander verbunden werden, insbesondere zu Magazinen, womit der Platzbedarf beim Transport oder der Lagerung auf ein Minimum reduziert wird. Hierfür können an den Hüllen 1 und 2 entsprechende Ausnehmungen und Gegenstücke und/oder (ebenfalls nicht dargestellte) Verbindungsmittel vorgesehen sein.

In der Fig. 9 ist eine weitere Ausführungsform eines Behältnisses zur Aufbewahrung und zum Schutz von Tonträgern dargestellt, bei der die Verschlußhülle zwei halbkreisförmige Innenräume 10 aufweist, die mit mehreren Aufnahmehüllen 1 drehbar verbunden sind (nicht dargestellt). Für ein Compact Disc-Magazin können auch mehrere Innenräume 10 vorgesehen sein, die in einer entsprechend breiteren Verschlußhülle 17 untergebracht sind.

Gemäß einer ebenfalls nicht dargestellten weiteren Ausführungsform kann die Compact Disc 3 während der Wiedergabe in einem Abspielgerät in dem Behältnis verbleiben, wobei ein Mechanismus des Abspielgerätes für das Abspielen der Compact Disc sorgt.

### Bezugszeichenliste:

- 1: Aufnahmehülle
- 2: Verschlußhülle
- 3: Tonträger/Compact Disc
- 4: Zapfen
- 5: Aussparung
- 6: Vorsprung
- 7: Ausnehmung
- 8: Riffelung
- 9: Innennut
- 10: Innenraum
- 11: Ausnehmung
- 12: Stirnseite
- 13: Rand
- 14: Seitenwand
- 15: Seitenwand
- 16: Vorsprung
- 17: Verschlußhülle
- 18: Kreismittelpunkt
- 19: Ecke
- 20: Greifvorrichtung
- 21: Ausnehmung
- 22: Ausnehmung

## Patentansprüche

1. Behältnis zur Aufbewahrung und zum Schutz von Tonträgern, insbesondere von Disketten, Compact Discs oder dgl., mit einem flachen Aufnahmeteil, das eine Ausnehmung zur zumindest teilweisen Aufnahme eines Tonträgers aufweist, und einem Verschlußteil, das mit dem Aufnahmeteil derart verbunden ist, daß das Aufnahmeteil zur Entnahme bzw. zum Einsetzen des Tonträgers in das Verschlußteil ein- bzw. herausschwenkbar ist, und wobei der Tonträger bei geschlossenem Behältnis vollständig von dem Aufnahmeteil und dem Verschlußteil umschlossen ist, **dadurch gekennzeichnet**, daß das Aufnahmeteil eine annähernd halbkreisscheibenförmige Aufnahmehülle (1) und das Verschlußteil eine ebenfalls annähernd halbkreisscheibenförmige Verschlußhülle (2) ist, daß die Innenkontur der Aufnahmehülle (1) einen gleichen oder etwas größeren Kreisradius und eine gleiche oder etwas größere Dicke als der Tonträger (3) aufweist, daß die Außenkontur der Aufnahmehülle (1) einen gleichen oder etwas kleineren Kreisradius und eine gleiche oder etwas kleinere Dicke als die Innenkontur der Verschlußhülle (2) aufweist und daß die Verbindung der Aufnahmehülle (1) mit der Verschlußhülle (2) annähernd in deren Kreismittelpunkten (18) ausgebildet ist.

2. Behältnis nach Anspruch 1, **dadurch gekennzeichnet**, daß die Aufnahmehülle (1) bzw. die Verschlußhülle (2) in ihrer Drehachse eine insbesondere zylinderförmige Aussparung (5) aufweisen, in die ein an der Verschlußhülle (2) bzw. der Aufnahmehülle (1) angeordneter, insbesondere formgleicher Zapfen (4) eingreift.

3. Behältnis nach einem der Ansprüche 1 oder 2, **dadurch gekennzeichnet**, daß an der Aufnahmehülle (1) bzw. der Verschlußhülle (2) ein oder mehrere Vorsprünge (6) ausgebildet sind, die in entsprechende Ausnehmungen (7) in der Ver schlußhülle (2) bzw. der Aufnahmehülle (1) eingreifen.

4. Behältnis nach Anspruch 3, **dadurch gekennzeichnet**, daß der oder die Vorsprünge (6) an einer oder beiden Ecken der Aufnahmehülle (1) bzw. der Verschlußhülle (2) angeordnet sind.

5. Behältnis nach Anspruch 3 und 4, **dadurch gekennzeichnet**, daß die Ausnehmungen (7) in den äußeren Ecken der Verschlußhülle (2) bzw. der Aufnahmehülle (1) ausgebildet sind.

6. Behältnis nach einem der Ansprüche 1 bis 5, **dadurch gekennzeichnet**, daß im Bereich der radial außen liegenden Ecken der Aufnahmehülle (1) ein Greifvorrichtung (20) angeordnet ist, die in als Anschlag dienende Ausnehmungen (21 und 22) im äußeren Randbereich der Verschlußhülle (2) in Eingriff bringbar ist.

7. Behältnis nach Anspruch 6, **dadurch gekennzeichnet**, daß die Greifvorrichtung (20) eine Kugel, ein Knopf, ein Halter, ein Haken oder dgl. ist.

8. Behältnis nach einem der vorhergehenden Ansprüche, **dadurch gekennzeichnet**, daß an der Aufnahmehülle (1) und/oder der Verschlußhülle (2) Riffelungen (8) ausgebildet sind.

9. Behältnis nach einem der Ansprüche 1 bis 8, **dadurch gekennzeichnet**, daß an der Stirnseite (12) der Ausnehmung (11) zur Aufnahme eines Tonträgers (3) in der Aufnahmehülle (1) eine radiale Innennut (9) ausgebildet ist.

10. Behältnis nach Anspruch 9, **dadurch gekennzeichnet**, daß die Innennut (9) so dimensioniert ist, daß der radiale äußere, unbespielte Rand (13) des Tonträgers (3), insbesondere einer Compact Disc, in der Innennut (9) eingreift und dort ggf. leicht einklemmbar ist.

11. Behältnis nach einem der Ansprüche 1 bis 9, **dadurch gekennzeichnet**, daß die Innenwände der halbkreisscheibenförmigen Aufnahmehülle (1) und/oder Verschlußhülle (2) kratzfrei sind.

12. Behältnis nach einem der vorhergehenden Ansprüche, **dadurch gekennzeichnet**, daß die Ausnehmung (11) in der Aufnahmehülle (1) in ihrer Breite etwas nach außen gewölbt ist.

13. Behältnis nach einem der vorhergehenden Ansprüche, **dadurch gekennzeichnet**, daß zumindest an einer der beiden Seitenwände (14, 15) der Aufnahmehülle (1) ein als Einführhilfe für den Tonträger (3) ausgebildeter Vorsprung (16) ausgebildet ist.

14. Behältnis nach einem der vorhergehenden Ansprüche, **dadurch gekennzeichnet**, daß die Aufnahmehülle (1) und/oder die Verschlußhülle (2) aus Kunststoff, Metall oder Pappe oder aus einer Kombination in diesen Materialien besteht.

15. Behältnis nach einem der vorhergehenden Ansprüche, **dadurch gekennzeichnet**, daß die Behältnisse durch Aussparungen, Vertiefungen oder dgl. Ausnehmungen und entsprechende Gegenstücke an den Hüllen (1, 2) stapelbar und/oder durch Verbindungsmittel miteinander verbindbar sind.

16. Behältnis nach einem der vorhergehenden Ansprüche, **dadurch gekennzeichnet**, daß die Verschlußhülle (17) zwei oder mehrere halbkreisscheibenförmige Innenräume (10) aufweist, die mit einer entsprechenden Anzahl von Aufnahmehüllen (1) drehbar verbunden sind.

17. Behältnis nach einem der vorhergehenden Ansprüche, **dadurch gekennzeichnet**, daß die Compact Disc (3) während der Wiedergabe in einem Abspielgerät in dem Behältnis verbleibt.

## Claims

1. A container for storing and protecting sound carriers, in particular diskettes, compact discs or the like, having a flat holder part comprising a recess for at least partially accommodating a sound carrier, and a closure part connected to the holder part so as to permit the holder part to be swung into or out of the closure part to insert or remove the sound carrier, and the sound carrier being completely surrounded by the holder part and the closure part when the container is closed, **characterized in that** the holder part is an approximately semicircular disk-shaped holder casing (1) and the closure part is a likewise approximately semicircular disk-shaped closure casing (2), that the inner contour of the holder casing (1) has an equal or somewhat larger circle radius and an equal or somewhat greater thickness than sound carrier (3), that the outer contour of holder casing (1) has an equal or somewhat smaller circle radius and an equal or somewhat lesser thickness than the inner contour of closure casing (2), and that holder casing (1) and closure casing (2) are connected approximately at the center (18) of the circle which they form.

2. The container as defined by claim 1, **characterized in that** holder casing (1) or closure casing (2) have a substantially cylindrical opening (5) in their center of rotation with which a substantially identically-shaped pin (4) arranged on the closure casing (2) or the holder casing (1) engages.

3. The container as defined by one of the claims 1 or 2, **characterized in that** formed on holder casing (1) or closure casing (2) are one or a plurality of projections (6) which engage with corresponding cutouts (7) in closure casing (2) or holder casing (1).

4. The container as defined by claim 3, **characterized in that** projection(s) (6) are arranged at one or both corners of holder casing (1) or closure casing (2).

5. The container as defined by claim 3 and 4, **characterized in that** cutouts (7) are formed in the outer corners of closure casing (2) or holder casing (1).

6. The container as defined by one of the claims 1 through 5, **characterized in that**, in the region of the corners of the holder casing (1) lying radially to the outside, a gripping device (20) is arranged which is able to be brought into engagement with recesses (21 and 22) serving as stop means in the outer edge area of closure casing (2).

7. The container as defined by claim 6, **characterized in that** gripping device (20) is a ball, a knob, a handle, a hook or the like.

8. The container as defined by one of the preceding claims, **characterized in that** ribbings (8) are formed on holder casing (1) and/or closure casing (2).

9. The container as defined by one of the claims 1 through 8, **characterized in that** a radial inner slot (9) is formed on end face (12) of recess (11) for accommodating a sound carrier (3) in holder casing (1).

10. The container as defined by claim 9, **characterized in that** inner slot (9) is dimensioned so as to permit the radial, outer, unrecorded edge (13) of the sound carrier (3), in particular a compact disc, to engage with the inner slot (9) and to be lightly squeezed there, if necessary.

11. The container as defined by one of the claims 1 through 9, **characterized in that** the inner walls of the semicircular disk-shaped holder casing (1) and/or closure casing (2) are scratch-free.

12. The container as defined by one of the preceding claims, **characterized in that** recess (11) in holder casing (1) is curved somewhat outwardly in its width.

13. The container as defined by one of the preceding claims, **characterized in that** a projection (16) designed as an insertion aid for the sound carrier (3) is formed on at least one of the two side walls (14, 15) of holder casing (1).

14. The container as defined by one of the preceding claims, **characterized in that** holder casing (1) and/or closure casing (2) consists of plastic, metal or cardboard, or of a combination of these materials.

15. The container as defined by one of the preceding claims, **characterized in that** the containers are stackable by means of notches, slots or openings of the like and corresponding mating components on the casings (1,2) and/or are connectible to one another by joining means.

16. The container as defined by one of the preceding claims, **characterized in that** closure casing (17) has two or more semicircular disk-shaped inside spaces (10) which are rotatably connected to a corresponding number of holder casings (1).

17. The container as defined by one of the preceding claims, **characterized in that** compact disc (3) remains in the container when replayed in a playback device.

## Revendications

1. Boîtier pour conserver et protéger des supports de sons ou d'enregistrement, en particulier de disquettes, disques compacts ou analogues, avec une partie de logement plate qui présente un évidement pour recevoir au moins partiellement un support de sons, et une partie de fermeture qui est reliée avec la partie de logement de telle sorte que la partie de logement pour le prélèvement ou la mise en place du support de sons dans la partie de fermeture peut s'introduire ou s'extraire par pivotement et le support de sons avec le boîtier fermé étant entièrement entouré par la partie de logement et la partie de fermeture, caractérisée en ce que la partie de logement est une enveloppe de logement (1) ayant la forme d'un disque approximativement semi-circulaire et la partie de fermeture (2) est une enveloppe de fermeture (2) ayant également la forme d'un disque approximativement semi-circulaire, en ce que le contour intérieur de l'enveloppe de logement (1) présente un rayon de cercle identique ou légèrement supérieur et une épaisseur identique ou légèrement supérieure au support de sons (3), en ce que le contour externe de l'enveloppe de logement (1) présente un rayon de cercle identique ou légèrement plus petit et une épaisseur identique ou légèrement plus petite que le contour interne de l'enveloppe de fermeture (2) et en ce que la liaison entre l'enveloppe de logement (1) et l'enveloppe de fermeture (2) est formée approximativement dans les points médians du cercle (18).

2. Boîtier selon la revendication 1, caractérisé en ce que l'enveloppe de logement (1) ou l'enveloppe de fermeture (2) présente dans son axe rotatif un évidement (5) en particulier cylindrique dans lequel s'engage un tourillon (4) disposé sur l'enveloppe de fermeture (2) ou sur l'enveloppe de logement (1), en particulier de forme identique.

3. Boîtier selon l'une des revendications 1 ou 2, caractérisé en ce que sur l'enveloppe de logement (1) ou sur l'enveloppe de fermeture (2), sont formées une ou plusieurs saillies (6) qui s'engage(nt) dans des évidements correspondants (7) dans l'enveloppe de fermeture (2) ou l'enveloppe de logement (1).

4. Boîtier selon la revendication 3, caractérisé en ce que la ou les saillie(s) (6) sont disposées sur un côté ou sur les deux côtés de l'enveloppe de logement (1) ou l'enveloppe de fermeture (2).

5. Boîtier selon les revendications 3 et 4, caractérisé en ce que les évidements (7) sont formés dans les coins extérieurs de l'enveloppe de fermeture (2) ou de l'enveloppe de logement (1).

6. Boîtier selon l'une des revendications 1 à 5, caractérisé en ce qu'au niveau des coins situés extérieurement radialement de l'enveloppe de logement (1), est agencé un dispositif de prise (20) qui peut être mis en engagement dans les évidements (21 et 22) servant de butées dans la zone marginale extérieure de l'enveloppe de fermeture (2).

7. Boîtier selon la revendication 6, caractérisé en ce que le dispositif de préhension (20) est une sphère, un bouton, un support, un crochet ou analogue.

8. Boîtier selon l'une des revendications précédentes, caractérisé en ce que sur l'enveloppe de logement (1) et/ou l'enveloppe de fermeture (2) sont formées des cannelures (8).

9. Boîtier selon l'une des revendications 1 à 8, caractérisé en ce que sur le côté frontal (12) de l'évidement (11) est formée une gorge interne radiale (9) pour recevoir un support de sons (3) dans l'enveloppe de logement (1).

10. Boîtier selon la revendication 9, caractérisé en ce que la gorge interne (9) est dimensionnée de telle sorte que le bord extérieur radial non enregistré (13) du support de sons (3), en particulier d'un disque compact s'engage dans la gorge interne (9) et peut y être éventuellement facilement inséré.

11. Boîtier selon l'une des revendications 1 à 9, caractérisé en ce que les parois internes de l'enveloppe de logement en forme de disque semi-circulaire (1) et/ou l'enveloppe de fermeture (12) sont exemptes d'éraflures.

12. Boîtier selon l'une des revendications précédentes, caractérisé en ce que l'évidement (11) dans l'enveloppe - de logement (1) est bombé dans sa largeur sensiblement vers l'extérieur.

13. Boîtier selon l'une des revendications précédentes, caractérisé en ce qu'au moins sur l'une des deux parois latérales (14, 15) de l'enveloppe de logement (1) est formée une saillie (16) conçue pour faciliter l'introduction du support de sons (3).

14. Boîtier selon l'une des revendications précédentes, caractérisé en ce que l'enveloppe de logement (1) et/ou l'enveloppe de fermeture (2) consiste en matière synthétique, métal ou carton ou en une combinaison de ces matériaux.

15. Boîtier selon l'une des revendications précédentes, caractérisé en ce que les boîtiers peuvent être empilés par des évidements, dépressions ou cavités analogues et des contre-parties correspondantes sur les enveloppes (1, 2) et/ou être raccordées entre elles par des moyens de liaison.

16. Boîtier selon l'une des revendications précédentes, caractérisé en ce que l'enveloppe de fermeture (17) comporte deux ou plus de deux zones internes (10) en forme de disque semi-circulaire qui sont reliées par une quantité correspondante d'enveloppes de logement (1) de façon rotative.

17. Boîtier selon l'une des revendications précédentes, caractérisé en ce que pendant la lecture dans un appareil approprié, le disque compact (3) demeure dans le boîtier.
